# EUROPÄISCHE PATENTSCHRIFT

(11) **EP 1 966 497 B1**
(45) Veröffentlichungstag und Bekanntmachung des Hinweises auf die Patenterteilung: **09.06.2010**
(21) Anmeldenummer: 06829601.1
(22) Anmeldetag: 14.12.2006
(51) Int. Cl.: F16B 13/14, F16B 13/00

(54) **DÜBELANORDNUNG**
DOWEL ARRANGEMENT
SYSTEME DE CHEVILLE

(30) Priorität: 20.12.2005 DE 102005061228
(43) Veröffentlichungstag der Anmeldung: 10.09.2008
(73) Patentinhaber: Ranft, Jochen, 55270 Klein-Winternheim (DE)
(72) Erfinder: Ranft, Jochen, 55270 Klein-Winternheim (DE)
(74) Vertreter: Quermann, Helmut
(86) Internationale Anmeldenummer: PCT/EP2006/012045
(87) Internationale Veröffentlichungsnummer: WO 2007/071338

(56) Entgegenhaltungen:
- EP-A- 0 287 505
- DE-A1- 19 519 397

## Beschreibung

Die Erfindung bezieht sich auf eine Dübelanordnung mit einem Dübel, einem Dübelloch zur Aufnahme des Dübels und einer auszuhärtenden Masse zum Verankern des Dübels im Dübelloch.

Bei einer solchen Dübelanordnung wird der Dübel mittels der ausgehärteten Masse in dem Mauerwerk oder dergleichen verankert. Beim Aushärten der Masse entsteht eine formschlüssige Verbindung zwischen dem Dübel und dem Dübelloch.

In einem Anwendungsfall, der im Stand der Technik allgemein mit Injektionssystem bezeichnet wird, stellt die aushärtende Masse ein Mehrkomponentengemisch dar, insbesondere ist die aushärtende Masse Mörtel, Zement oder ein Kleber. - Nach dem Herstellen des Dübellochs und dessen Reinigung, beispielsweise durch Ausbürsten oder Ausblasen, wird aus einer Kartusche Verbundmörtel, ausgehend vom Bohrlochgrund in das Dübelloch gefüllt. Dann wird der Dübel, bei dem es sich beispielsweise um eine Ankerstange handelt, unter leichter Drehbewegung bis zum Bohrlochgrund eingedrückt. Tritt die Mörtelfüllung oben aus dem Dübelloch aus, ist dies eine optische Kontrolle für die Mörtelfüllmenge. Es ist dann erforderlich, eine Aushärtezeit des Verbundmörtels von etwa 45 min., bei einer Außentemperatur von 20°C, einzuhalten, bevor ein Montagedrehmoment in den Dübel eingebracht werden kann, demnach das mit dem Dübel zu verbindende Bauteil montiert werden kann.

Eine ähnliche Situation stellt sich bei Anwendung eines sogenannten Verbundankers dar. - Nach dem Bohren des Dübellochs und dessen Reinigung wird eine Patrone in das Dübelloch eingeschoben. In dieser Patrone befinden sich, getrennt, in aller Regel zwei chemische Komponenten. Wird anschließend in das Dübelloch der Dübel eingeschlagen, hat dies zur Folge, dass die Patrone zerstört wird und sich die in der Patrone befindlichen Komponenten mischen und chemisch reagieren. Auch hier ist eine optische Kontrolle der Füllmenge aufgrund des Austretens des Komponentengemisches aus dem Dübelloch möglich. Nach einer Aushärtezeit von ca. 20 min. bei einer Umgebungstemperatur von 20°C kann die Montage des mit dem Dübel zu verbindenden Bauteils vonstatten gehen und das in diesem Zusammenhang erforderliche Drehmoment bei der Montage aufgebracht werden.

Die vorgenannten Dübelanordnungen sind zur Anwendung bei ungerissenem und gerissenem Beton zugelassen.

Der Begriff "Dübel" ist im Sinne der vorliegenden Erfindung umfassend zu verstehen. Es muss sich keinesfalls um ein spreizbares Bauteil handeln, sondern es ist grundsätzlich jegliches stiftförmige, beispielsweise mit einem Gewinde versehene Bauteil als Dübel anzusehen.

Zum Stand der Technik ist beispielsweise ein als Fix-Anker bezeichneter Dübel bekannt, wobei das Dübelloch nur der Aufnahme dieses Ankers dient, somit keine aushärtende Masse zum Verankern des Dübels im Dübelloch vorgesehen ist. Nach dem Bohren des Dübellochs und dessen Reinigung wird der Anker in das Dübelloch eingeschlagen und es spreizen sich beim Aufbringen eines Drehmoments in den Dübel Spreizflügel des Dübels vom Dübelgrundkörper ab, womit der Dübel im Dübelloch verankert ist. Ein solcher Anker ist für die Verankerung im gerissenen Beton und im ungerissenen Beton zugelassen.

Es sind ferner sogenannte Schraubanker bekannt, die als Schrauben ausgebildet sind, die unmittelbar in ein gereinigtes Bohrloch eingeschraubt werden und demzufolge unmittelbar der Befestigung des Bauteils an einer Wand oder dergleichen dienen. Ein solcher Schraubanker ist ausschließlich für die Befestigung von mittleren Lasten in ungerissenem Beton und darüber hinaus nur für die Verwendung im Innenbereich geeignet.

Der beschriebene Fix-Anker und der beschriebene Schraubanker sind unmittelbar nach dem Setzen vollständig belastbar.

In der EP 0 287 505 A ist ein zweiteiliger Dübel beschrieben, der durch eine Siebhülse und eine darin einsetzbare Einsatzhülse mit einer Aufnahmeöffnung für ein Befestigungselement gebildet ist. Beim Setzvorgang des Verankerungsteils wird zunächst die Siebhülse in ein Bohrloch eines Untergrundmaterials eingesetzt. Anschließend wird aushärtende Masse in die Siebhülse eingebracht und gelangt durch die Durchtrittsöffnung der Siebhülse in die Hohlräume zwischen Wandungen eines Bauwerks. Anschließend wird die Einsatzhülse in die Siebhülse eingeführt. Dabei wird der in der Siebhülse verbleibende Teil der aushärtenden Masse ebenfalls aus der Siebhülse verdrängt. Die aushärtende Masse bedingt einen Formschluss mit dem Untergrundmaterial. Nach dem Aushärten der Masse wird ein dem jeweils zu befestigenden Bauteil entsprechend angepasstes, als Schraube ausgebildetes Befestigungselement in die Einsatzhülse eingeschraubt. Die Befestigung ist somit jederzeit und problemlos wieder lösbar. Bei dieser Gestaltung der Dübelanordnung kann somit erst dann, wenn, nach dem Einführen der Einsatzhülse in die Siebhülse, die in die Hohlräume eingebrachte Masse vollständig ausgehärtet ist und damit der Untergrund, die ausgehärtete Masse, die Siebhülse und die Einsatzhülse einen Gesamtkörper bilden, das Befestigungselement mit der Einsatzhülse verbunden werden.

Bei dem beschriebenen Dübel ist die Siebhülse außen mit Flossen versehen, die bei eingesetzter Siebhülse die Bauwerkswandung kontaktieren.

Aufgabe der vorliegenden Erfindung ist es, eine Dübelanordnung mit einem Dübel, einem Dübelloch zur Aufnahme des Dübels und einer aushärtenden Masse zum Verankern des Dübels im Dübelloch so weiter zu bilden, dass bereits während der Aushärtezeit der Masse ein mit dem Dübel zu befestigendes Bauteil vormontiert werden kann.

Gelöst wird die Aufgabe durch eine Dübelanordnung mit einem durch ein einziges Bauteil gebildeten Dübel, einem Dübelloch zur Aufnahme des Dübels und einer aushärtenden Masse zum Verankern des Dübels im Dübelloch, wobei der Dübel, bezogen auf seine Einsteckrichtung in das Dübelloch, einen vorderen Abschnitt aufweist, dessen Durchmesser geringer ist als der Durchmesser des Dübellochs, zur Aufnahme der aushärtenden Masse zwischen dem Dübel und dem Dübelloch, sowie einen hinteren Abschnitt aufweist, der unter radialer Vor spannung das Dübelloch kontaktiert.

Die erfindungsgemäße Dübelanordnung vermeidet somit die Nachteile der vorbeschriebenen Dübelanordnungen zum Stand der Technik, die aushärtende Massen zum Verankern des Dübels im Dübelloch benötigen. Im Gegensatz zu diesem Stand der Technik, bei dem Aushärtezeiten in Abhängigkeit von der Außentemperatur zu beachten sind, die in aller Regel mindestens zwischen 20 und 40 min. liegen, ist bei der erfindungsgemäßen Dübelanordnung der Dübel unmittelbar nach dem Einbringen in das Bohrloch teilweise belastbar, so dass Vormontagevorgänge betreffend das mit dem Dübel zu befestigende Bauteil vorgenommen werden können.

So wird bei der erfindungsgemäßen Dübelanordnung der Dübel nicht, wie beim Stand der Technik, lose in die aushärtende Masse eingesetzt, sondern es weist der Dübel einen Abschnitt auf, im Sinne der vorstehenden Definition als hinterer Abschnitt bezeichnet, der unter radialer Vorspannung das Dübelloch kontaktiert. Dies bedeutet, dass der Dübel in diesem Bereich reib- oder formschlüssig im Dübelloch gehalten ist und damit unmittelbar nach dem Setzen des Dübels gewisse Kräfte aufnehmen kann, die selbstverständlich unter denjenigen sind, die nach dem Aushärten der Masse in den Dübel eingeleitet werden können. Diese reduzierten Haltekräfte des Dübels sind aber geeignet, Montagearbeiten durchführen zu können, bei denen es noch nicht darauf ankommt, den Dübel mit der vollen Haltekraft zu beaufschlagen und dennoch maximale Drehmomente zum Befestigen des Bauteils in den Dübel einzubringen.

Gedacht ist beispielsweise an die Montage von Markisen. Bei der Montage von Markisen sind an einer Gebäudewand mehrere Dübellöcher einzubringen und in diese Dübel einzusetzen. Anschließend sind Halter, an denen die Markise anzubringen ist, vorzumontieren und auszurichten. Während dieser Vormontage und Ausrichtung ist es nicht erforderlich, große Kräfte in die Dübel einzuleiten. Bei Verwendung der erfindungsgemäßen Dübelanordnung kann der Monteur die Halter für die Markise präzise ausrichten und festschrauben, indem Schrauben die Halter durchsetzen und in die Dübel eingeschraubt sind. Die Schraubkraft zum Befestigen der Halter können die Dübelanordnungen ohne weiteres aufnehmen, weil der hintere Abschnitt des Dübels mit der ausreichend hoch bemessenen radialen Vorspannung das Dübelloch kontaktiert. Dann, wenn die Halter montiert und ausgerichtet sind, wobei dies in aller Regel eine Zeitspanne benötigt, die die Aushärtezeit der auszuhärtenden Masse überschreitet, kann die Markise an den Haltern angebracht und mit wenigen einfachen Arbeitsschritten endgültig montiert werden. - Die erfindungsgemäße Dübelanordnung ermöglicht es somit, während der Aushärtezeit der Masse ein mit dem Dübel zu befestigendes Bauteil vorzumontieren, im konkreten Anwendungsfall einen Halter für eine Markise.

Die Montage des Dübels geschieht wie folgt: Nach dem Bohren des Dübellochs und dessen Reinigung wird die auszuhärtende Masse in das Loch eingespritzt oder aber die Patrone in das Loch eingesteckt und anschließend der Dübel drehend oder schlagend gesetzt, wobei sich der hintere Bereich des Dübels im Dübelloch verklemmt. Um eine optische Kontrolle betreffend die Füllmenge der auszuhärtenden Masse zu erreichen, ist der hintere Abschnitt des Dübels vorteilhaft mit mindestens einem Längsschlitz oder einer Längsnut versehen, durch die die Masse aus dem Dübelloch austreten kann.

Gemäß der vorliegenden Erfindung kann der vordere Abschnitt des Dübels am Umfang auf unterschiedliche Art und Weise gestaltet sein. Es ist denkbar, den Dübel in diesem Bereich am Umfang glatt zu gestalten, mit Riffeln, mit sternförmigem Querschnitt, mit einem Außengewinde oder mit mindestens einem Spreizelement zu versehen. Hierdurch ergibt sich entsprechend den technischen Vorgaben der jeweiligen Gestaltung das Erfordernis oder die Möglichkeit, den Dübel einzuschlagen oder einzuschrauben.

Die auszuhärtende Masse stellt beispielsweise ein Mehrkomponentengemisch dar, insbesondere ist die auszuhärtende Masse ein Mörtel, ein Zement oder ein Kleber. Es ist gleichfalls von Vorteil, wenn die aushärtende Masse ein chemisch wirkendes Mehrkomponentengemisch ist, insbesondere ein Zweikomponentengemisch ist. Bei Verwendung eines Mehrkomponentengemisches befinden sich die mehreren Komponenten getrennt in einer Patrone und es wird die in das Dübelloch eingesetzte Patrone im Dübelloch zerstört, insbesondere beim Einschlagen des Dübels in das Dübelloch zerstört.

Der Dübel kann aus den unterschiedlichsten Materialien hergestellt sein. Es ist beispielsweise an Stahl, eine Legierung, Edelstahl, Keramik, Aluminium oder Kunststoff gedacht.

In aller Regel, und dies wird der häufigste Anwendungsbereich sein, bildet der Dübel eine Baueinheit mit einem Gewindebolzen, wobei der Gewindebolzen außerhalb des Dübellochs angeordnet ist und der Befestigung eines Bauteils dient. Bei dieser Gestaltung besteht der Dübel mit dem Gewindebolzen insbesondere aus Metall.

Eine besonders interessante Gestaltung des Dübels wird darin gesehen, wenn dieser mit einem Innengewinde versehen ist, zum Befestigen eines Bauteils mit dem Dübel. Bei einer solchen Gestaltung steht somit kein Gewindebolzen außen über das zu befestigende Bauteil vor und es sind auch keine Dübel mit Gewindebolzen unterschiedlicher Länge vorzuhalten. Bei der Ausbildung des Dübels mit dem Innengewinde können stattdessen übliche im Handel befindliche Schrauben unterschiedlicher Zusammensetzung und unterschiedlicher Gewindelänge, je nach den Anforderungen, die insbesondere durch die Geometrie des Bauteils gestellt werden, verwendet werden. Bei Befestigung des Bauteils ist von außen nur die Schraubenmutter der in das Innengewinde des Dübels eingeschraubten Schraube zu sehen.

Insbesondere bei der Variante, bei der der Dübel mit dem Innengewinde versehen ist, wird es als vorteilhaft angesehen, wenn das Bohrloch des Dübels, das das Innengewinde aufweist, im Bereich des Lochgrunds eine Aufnahme für ein Werkzeug aufweist. Mittels dieses Werkzeuges kann der Dübel in das Bohrloch eingeschlagen oder eingedreht werden. Vorzugsweise wird der Dübel in diesem Fall in das Dübelloch eingedreht. Der Lochgrund ist hierzu mit einer im Querschnitt als Mehrkant ausgebildeten Aufnahme, insbesondere einer Innensechskantaufnahme versehen. Im letztgenannten Fall lässt sich der Dübel mittels eines Sechskantschlüssels einfach in das Dübelloch eindrehen.

Bei dem mit dem Dübel zu befestigenden Bauteil handelt es sich insbesondere um einen Halter für eine Markise.

Die Erfindung schlägt somit eine Dübelanordnung vor, die insbesondere für Markisenmontage geeignet ist. Der Dübel weist vorzugsweise ein Innengewinde auf und ist insbesondere einsetzbar bei Beton und Hohlblocksteinen. Es sind keine störenden Gewindeüberstände bei einem Innengewinde des Dübels zu verzeichnen, da die Schraubenlänge der in den Dübel einzuschraubenden Schraube variabel ist. Es sind keine unterschiedlichen Dübelvarianten für unterschiedliche Dübellochtiefen vorzuhalten. Bisherige Klebe-/Injektionsmittel können verwendet werden. Der Durchmesser des Dübellochs ist trotz großem Innengewinde des Dübels gering, weil der Bereich des Innengewindes sich dort befindet wo der Dübel das Dübelloch kontaktiert und demzufolge einen gegenüber dem sonstigen Bereich des Dübels erweiterten Durchmessers aufweist. Es können mit der Dübelanordnung geringe Randabstände verwirklicht werden sowie eine druckfreie Verbindung mit dem Untergrund. Der Dübel ist sowohl für gerissenen als auch ungerissenen Beton geeignet. Die Herstellungskosten bei der erfindungsgemäßen Dübelanordnung sind nicht höher als die bei Dübelanordnungen nach dem Stand der Technik.

Weitere Merkmale der Erfindung sind Gegenstand der Patentansprüche, der Beschreibung der Figuren sowie der Figuren selbst.

In den Figuren ist die Erfindung anhand eines Ausführungsbeispieles näher erläutert, ohne hierauf beschränkt zu sein. Es zeigt:
- Figur 1: eine Ausführungsform des bei der erfindungsgemäßen Dübelan- ordnung Verwendung findenden Dübels, in einem Längsmittel- schnitt dargestellt,
- Figur 2: die erfindungsgemäße Dübelanordnung mit dem mit dem Dübel- loch versehenen Mauerwerk und dem in das Dübelloch eingesetz- ten Dübel, in einem Schnitt durch das Mauerwerk und einem Längsmittelschnitt durch den Dübel,

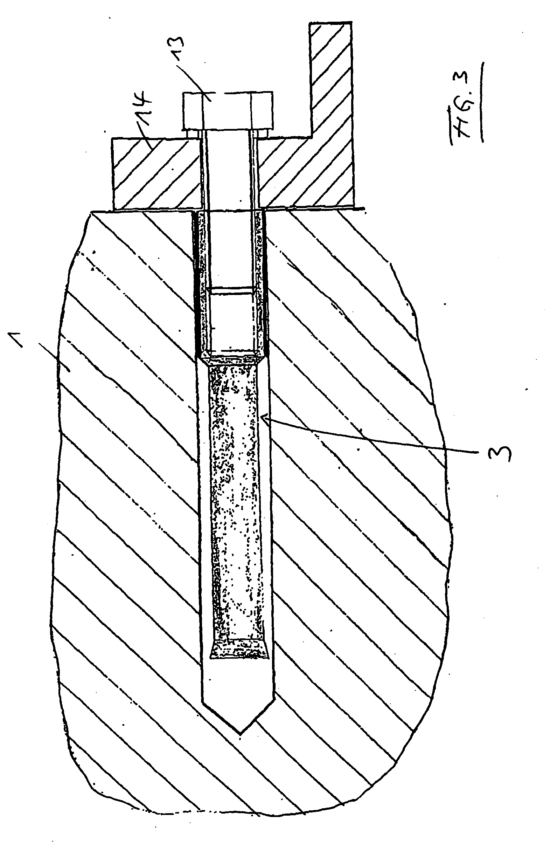

- Figur 3: eine Schnittdarstellung gemäß Figur 2, bei mittels einer Schraube mit dem Dübel befestigten Halter, wobei an mehreren derartig mit- tels Dübeln gelagerten Haltern eine Markise befestigbar ist.

Gezeigt ist der Querschnitt durch ein Mauerwerk 1 aus Beton, beispielsweise eine Hauswand, an der eine Markise zu befestigen ist. In das Mauerwerk 1 ist ein Dübelloch 2 gebohrt, das beispielsweise einen Durchmesser von 14 mm aufweist. Das Dübelloch 2 dient der Aufnahme eines Dübels 3. Der Dübel 3 besteht aus Metall und ist einteilig ausgebildet. Der Dübel 3 weist, bezogen auf seine Einsteckrichtung in das Dübelloch 2, einen vorderen Abschnitt 4 und, unmittelbar angrenzend an diesen, einen hinteren Abschnitt 5 auf. Der hintere Abschnitt 5 ist am radial äußeren Umfang mit einer Riffelung 6 versehen. Der hintere Abschnitt 5 des Dübels 6 stellt sich somit als zylindrischer Körper mit Riffelung 6 am Umfang dar. Der Außendurchmesser, des hinteren Abschnitts 5 ist so bezüglich des Durchmessers des Dübellochs 2 bemessen, das beim Einsetzen des Dübels 3 in das Dübelloch 2 der hintere Abschnitt 5 unter radialer Vorspannung das Dübelloch 2 kontaktiert.

Der vordere Abschnitt 4 weist einen Durchmesser auf, der deutlich geringer ist als der Außendurchmesser des inneren Abschnitts 5. Der Durchmesser des vorderen Abschnitts 4 beträgt beispielsweise 10 mm. Im Bereich seines vorderen Endes 7 weist der Dübel 3 einen sich konisch erweiternden Abschnitt 8 auf. Der maximale Durchmesser dieses Abschnitts 8 ist geringer als der Durchmesser des hinteren Abschnitts 5. Durch diese Abstimmung der Durchmesser kann der Dübel 3 vorne geführt in das Dübelloch 2 eingesetzt werden und es ist zwischen dem erweiterten Abschnitt 8 und dem hinteren Abschnitt 5 quasi ein Aufnahmeringraum 9 gebildet. Der Dübel 3 ist zwischen den Abschnitten 5 und 8 als glatter Stab 10 ausgebildet.

Der hintere Abschnitt 5 des Dübels 3 ist mit einer Bohrung 11 mit Innengewinde 12 versehen. Dieses Innengewinde hat beispielsweise einen Durchmesser von 10 mm und dient der Aufnahme einer handelsüblichen Schraube, deren Länge entsprechend den Anforderungen des mit dem Dübel 3 mittels der Schraube 13 zu befestigenden Bauteils 14 verbunden ist.

Die Montage des Dübels 3 in der vorstehend veranschaulichten Dübelanordnung geschieht wie folgt:

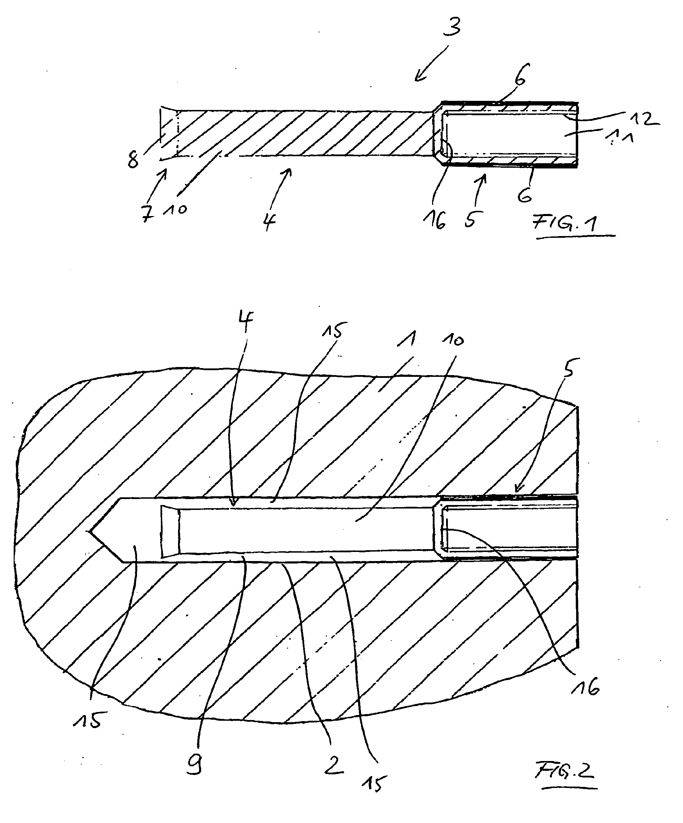

Nach dem Bohren des Dübellochs 2 und dessen Reinigen wird in dieses auszuhärtende Masse 15 eingebracht, entsprechend dem Stand der Technik. Es handelt sich demzufolge insbesondere um ein Mehrkomponentengemisch, wie Mörtel, Zement oder ein Kleber bzw. um ein chemisch wirkendes Mehrkomponentengemisch, das, bei getrennten Komponenten, mittels einer Patrone in das Dübelloch 2 eingebracht wird. Beim anschließenden Einschlagen des Dübels 3 mittels eines stabförmigen Werkzeuges, das den Grund 16 der Bohrung 11 des Dübels 3 kontaktiert, wird bei Verwendung einer Patrone diese vom vorlaufenden Abschnitt 8 des Dübels 3 zerstört und es tritt sowohl in diesem Fall als auch bei einem vorher in das Dübelloch 2 eingespritzten auszuhärtenden Material dieses aus dem Dübelloch 2 heraus. Hierzu ist der Dübel 3 in dessen Längsrichtung mit mehreren, nicht veranschaulichten Umfangsnuten versehen. Ist der Dübel 3, wie in der Darstellung der Figur 2 veranschaulicht, vollständig in das Dübelloch 2 eingeschlagen und schließt somit bündig mit dem Lochausgang ab, ist ein ausreichender Halt des Dübels 3 im Dübelloch 2 aufgrund der Anlage des inneren Abschnitts 5 am Dübelloch 2 gewährleistet. Während der Aushärtezeit der auszuhärtenden Masse 15 kann an dem derart vorfixierten Dübel 3 gearbeitet werden, indem das mit dem Dübel 3 zu befestigenden Bauteil 14, vorliegend insbesondere ein Halter 14 für die Markise, ausgerichtet und mittels der Schraube 13 mit dem Dübel 3 verschraubt wird. Da in aller Regel bei einer Montage einer Markise mehrere Dübel 3 zu setzen sind und die Anbringung der Halter 14 einige Zeit benötigt, ist nach dem Anbringen der Halter die Aushärtezeit der Dübel überschritten und es kann dann unmittelbar die letzte Handlung vor dem Befestigen der Markise an den Haltern 14 vorgenommen werden, nämlich das Festziehen der Schrauben 13 zum Aufbringen des vorgeschriebenen Drehmoments.

Die Erfindung ermöglicht es somit dem jeweiligen Monteur bzw. den mit der Markisenaufhängung beschäftigten Monteuren, während der Aushärtezeit der Masse Vormontageschritte, die für das Anbringen der Markise erforderlich sind, vorzunehmen. Diese Vormontagearbeiten erfordern keine maximale Kraft- bzw. Drehmomentbeaufschlagung des Dübels.

## Patentansprüche

1. Dübelanordnung mit einem durch ein einziges Bauteil gebildeten Dübel (3), einem Dübelloch (2) zur Aufnahme des Dübels (3) und einer aushärtenden Masse (15) zum Verankern des Dübels (3) im Dübelloch (2), wobei der Dübel (3), bezogen auf seine Einsteckrichtung in das Dübelloch (2), einen vorderen Abschnitt (4) aufweist, dessen Durchmesser geringer ist als der Durchmesser des Dübellochs (2), zur Aufnahme der aushärtenden Masse (15) zwischen dem Dübel (3) und dem Dübelloch (2), sowie einen hinteren Abschnitt (5) aufweist, der unter radialer Vorspannung das Dübelloch (2) kontaktiert.

2. Anordnung nach Anspruch 1, **dadurch gekennzeichnet, dass** der vordere Abschnitt (4) des Dübels (3) und der hintere Abschnitt (5) des Dübels (3) aneinander grenzen.

3. Anordnung nach Anspruch 1 oder 2, **dadurch gekennzeichnet, dass** der hintere Abschnitt (5) des Dübels (3) einen gegenüber dem Durchmesser des vorderen Abschnitts (4) erweiterten Durchmesser aufweist.

4. Anordnung nach einem der Ansprüche 1 bis 3, **dadurch gekennzeichnet, dass** der hintere Abschnitt (5) mit mindestens einem Längsschlitz oder mindestens einer Längsnut versehen ist.

5. Anordnung nach einem der Ansprüche 1 bis 4, **dadurch gekennzeichnet, dass** der vordere Abschnitt (4) des Dübels (3) am Umfang glatt, mit Riefen, mit sternförmigem Querschnitt, mit einem Außengewinde oder mit mindestens einem Spreizelement versehen ist.

6. Anordnung nach einem der Ansprüche 1 bis 5, **dadurch gekennzeichnet, dass** die aushärtende Masse (15) ein Mehrkomponentengemisch darstellt, insbesondere die aushärtende Masse (15) Mörtel, Zement oder ein Kleber ist.

7. Anordnung nach einem der Ansprüche 1 bis 5, **dadurch gekennzeichnet, dass** die aushärtende Masse (15) ein chemisch wirkendes Mehrkomponentengemisch ist, insbesondere ein Zweikomponentengemisch ist.

8. Anordnung nach Anspruch 7, **dadurch gekennzeichnet, dass** die mehreren Komponenten sich getrennt in einer Patrone befinden, und die in das Dübelloch (2) eingesetzte Patrone im Dübelloch (2) zerstört wird, insbesondere beim Einschlagen des Dübels (3) in das Dübelloch (2) zerstört wird.

9. Anordnung nach einem der Ansprüche 1 bis 8, **dadurch gekennzeichnet, dass** der Dübel (3) aus Stahl, einer Legierung, Edelstahl, Keramik, Aluminium oder Kunststoff besteht.

10. Anordnung nach einem der Ansprüche 1 bis 9, **dadurch gekennzeichnet, dass** der Dübel (3) eine Baueinheit mit einem Gewindebolzen bildet, wobei der Gewindebolzen außerhalb des Dübellochs (2) angeordnet ist und der Befestigung eines Bauteils (14) dient.

11. Anordnung nach einem der Ansprüche 1 bis 9, **dadurch gekennzeichnet, dass** der Dübel (3) mit einem Innengewinde (12) versehen ist, zum Befestigen eines Bauteils (14) am Dübel (3).

12. Anordnung nach Anspruch 11, **dadurch gekennzeichnet, dass** ein Bohrloch (11) des Dübels (3), das das Innengewinde (12) aufweist, im Bereich des Lochgrunds (16) eine Aufnahme für ein Werkzeug zum Eindrehen des Dübels (3) in das Dübelloch (2) aufweist.

13. Anordnung nach Anspruch 12, **dadurch gekennzeichnet, dass** der Lochgrund (16) mit einer im Querschnitt als Mehrkant ausgebildeten Aufnahme, insbesondere einer Innensechskantaufnahme, versehen ist.

14. Anordnung nach einem der Ansprüche 10 bis 13, **dadurch gekennzeichnet, dass** das mit dem Dübel (3) zu befestigende Bauteil (14) ein Halter für eine Markise ist.

## Claims

1. Dowel arrangement with a dowel (3) formed by a single component, a dowel hole (2) for receiving the dowel (3), and a curing compound (15) for anchoring the dowel (3) in the dowel hole (2), wherein the dowel (3) has, with reference to its insertion direction into the dowel hole (2), a front portion (4), the diameter of which is smaller than the diameter of the dowel hole (2), for receiving the curing compound (15) between the dowel (3) and the dowel hole (2), and has a rear portion (5) which makes contact with the dowel hole (2) under radial prestress.

2. Arrangement according to Claim 1, **characterized in that** the front portion (4) of the dowel (3) and the rear portion (5) of the dowel (3) are mutually adjacent.

3. Arrangement according to Claim 1 or 2, **characterized in that** the rear portion (5) of the dowel (3) has an expanded diameter in relation to the diameter of the front portion (4).

4. Arrangement according to one of Claims 1 to 3, **characterized in that** the rear portion (5) is provided with at least one longitudinal slot or at least one longitudinal groove.

5. Arrangement according to one of Claims 1 to 4, **characterized in that** the front portion (4) of the dowel (3) has a smooth circumference, is provided with corrugations, with a star-shaped cross section, with an external thread or with at least one expanded element.

6. Arrangement according to one of Claims 1 to 5, **characterized in that** the curing compound (15) constitutes a multi-component mixture, in particular the curing compound (15) is mortar, cement or an adhesive.

7. Arrangement according to one of Claims 1 to 5, **characterized in that** the curing compound (15) is a chemically active multi-component mixture, in particular a two-component mixture.

8. Arrangement according to Claim 7, **characterized in that** the components are located separately in a cartridge, and the cartridge which is inserted into the dowel hole (2) is destroyed in the dowel hole (2), in particular is destroyed when the dowel (3) is driven into the dowel hole (2).

9. Arrangement according to one of Claims 1 to 8, **characterized in that** the dowel (3) is composed of steel, an alloy, stainless steel, ceramic, aluminium or plastic.

10. Arrangement according to one of Claims 1 to 9, **characterized in that** the dowel (3) forms a constructional unit with a threaded bolt, the threaded bolt being arranged outside the dowel hole (2) and serving to fasten a component (14).

11. Arrangement according to one of Claims 1 to 9, **characterized in that** the dowel (3) is provided with an internal thread (12), for fastening a component (14) to the dowel (3).

12. Arrangement according to Claim 11, **characterized in that** a drill hole (11) of the dowel (3) containing the internal thread (12) has, in the region of the hole base (16), a receptacle for a tool for screwing the dowel (3) into the dowel hole (2).

13. Arrangement according to Claim 12, **characterized in that** the hole base (16) is provided with a receptacle which is designed as a polygon in cross section, in particular with a hexagon socket.

14. Arrangement according to one of Claims 10 to 13, **characterized in that** the component (14) which is to be fastened by the dowel (3) is a holder for an awning.

## Revendications

1. Agencement de cheville comprenant une cheville (3) formée par un composant unique, un trou de cheville (2) pour recevoir la cheville (3) et une composition durcissable (15) pour l'ancrage de la cheville (3) dans le trou de cheville (2), la cheville (3), par rapport à sa direction d'insertion dans le trou de cheville (2), présentant une portion avant (4), dont le diamètre est inférieur au diamètre du trou de cheville (2), pour recevoir la composition durcissable (15) entre la cheville (3) et le trou de cheville (2), ainsi qu'une portion arrière (5), qui vient en contact avec le trou de cheville (2) avec précontrainte radiale.

2. Agencement selon la revendication 1, **caractérisé en ce que** la portion avant (4) de la cheville (3) et la portion arrière (5) de la cheville (3) sont adjacentes l'une à l'autre.

3. Agencement selon la revendication 1 ou 2, **caractérisé en ce que** la portion arrière (5) de la cheville (3) présente un diamètre élargi par rapport au diamètre de la portion avant (4).

4. Agencement selon l'une quelconque des revendications 1 à 3, **caractérisé en ce que** la portion arrière (5) est pourvue d'au moins une fente longitudinale ou d'au moins une rainure longitudinale.

5. Agencement selon l'une quelconque des revendications 1 à 4, **caractérisé en ce que** la portion avant (4) de la cheville (3) est lisse sur sa périphérie, et est pourvue de stries, d'une section transversale en forme d'étoile, d'un filetage extérieur ou d'au moins un élément d'écartement.

6. Agencement selon l'une quelconque des revendications 1 à 5, **caractérisé en ce que** la composition durcissable (15) est constituée par un mélange de plusieurs composants, notamment la composition durcissable (15) est un mortier, un ciment ou une colle.

7. Agencement selon l'une quelconque des revendications 1 à 5, **caractérisé en ce que** la composition durcissable (15) est un mélange de plusieurs composants à action chimique, notamment un mélange de deux composants.

8. Agencement selon la revendication 7, **caractérisé en ce que** les plusieurs composants se trouvent séparément dans une cartouche, et la cartouche insérée dans le trou de cheville (2) est détruite dans le trou de cheville (2), notamment est détruite sous le choc de la cheville (3) dans le trou de cheville (2).

9. Agencement selon l'une quelconque des revendications 1 à 8, **caractérisé en ce que** la cheville (3) se compose d'acier, d'un alliage, d'acier noble, de céramique, d'aluminium ou de plastique.

10. Agencement selon l'une quelconque des revendications 1 à 9, **caractérisé en ce que** la cheville (3) forme une unité constructive avec un boulon fileté, le boulon fileté étant disposé à l'extérieur du trou de cheville (2) et servant à la fixation d'un composant (14).

11. Agencement selon l'une quelconque des revendications 1 à 9, **caractérisé en ce que** la cheville (3) est pourvue d'un filetage interne (12), pour la fixation d'un composant (14) à la cheville (3).

12. Agencement selon la revendication 11, **caractérisé en ce qu'**un trou de perçage (11) de la cheville (3), qui présente le filetage interne (12), présente, dans la région du fond du trou (16), un logement pour un outil pour visser la cheville (3) dans le trou de cheville (2).

13. Agencement selon la revendication 12, **caractérisé en ce que** le fond du trou (16) est pourvu d'un logement réalisé en section transversale sous forme polygonale, notamment sous forme de logement à bords polygonaux internes.

14. Agencement selon l'une quelconque des revendications 10 à 13, **caractérisé en ce que** le composant (14) à fixer avec la cheville (3) est un dispositif de fixation pour un auvent.
